# NEW EUROPEAN PATENT SPECIFICATION

(11) **EP 0 569 234 B2**
(45) Date of publication and mention of the opposition decision: **07.07.2004**
(45) Mention of the grant of the patent: 16.07.1997
(21) Application number: 93303506.5
(22) Date of filing: 06.05.1993
(51) Int. Cl.: C08J 9/32, B01J 13/02, B01J 13/14

(54) **Thermoexpandable microcapsules having small particle size and production thereof**
Thermisch expandierbare Mikrokapseln mit kleiner Korngrösse und ihre Herstellung
Microcapsules thermo-expansibles ayant de petites particules et leur production

(30) Priority: 08.05.1992 JP 11585492
(43) Date of publication of application: 10.11.1993
(73) Proprietor: MATSUMOTO YUSHI-SEIYAKU CO., LTD., Yao-shi, Osaka-581 (JP)
(72) Inventor: Kida, Sueo, Kashihara-shi, Nara-ken (JP); Sasaki, Yoshitugu, Amagasaki-shi, Hyogo-ken (JP); Fujiwara, Takeshi, Osaka-shi, Osaka-fu (JP)
(74) Representative: Hayes, Adrian Chetwynd

(56) References cited:
- EP-A- 0 196 792
- EP-A- 0 387 796
- EP-A- 0 484 893
- EP-A- 0 486 080
- US-A- 3 615 972
- US-A- 4 243 754
- US-A- 4 771 079

## Description

The present invention relates to thermoexpandable microcapsules.

Thermoexpandable microcapsules have been used in various fields, for example, uneven pattern wallpapers, porous materials, light-weight materials and heat insulation, but in fields where a thin coated layer such as a paint, an extremely thin heat insulator or a very tight porous layer are used, thermoexpandable microcapsules of smaller particle size are required.

A process for the production of thermoexpandable microcapsules encapsulating a volatile organic solvent in a polymer shell is known as a basic technique, for example Japanese Patent Publication No. 42-26524. A particle size of greater than 15 µm is required in general in order to obtain a microcapsule having an expansion rate of several ten times. Various attempts at solving the above problem have been made but a sufficient expansion rate has not been obtained in a microcapsule of smaller than 10 µm. When the particle size of a microcapsule is controlled to be smaller than 10 µm, thermoexpandability is extremely reduced. The same phenomenon is observed in microcapsules which have a comparatively low expansion rate. If the particle size is smaller, only microcapsules having a very small expansion rate or little expansion are obtained.

The reason for the above is that if the thickness of the shell of the microcapsules is the same, the amount of polymer constituting the shell of one microparticle in comparison with the amount of the expanding agent (a volatile organic solvent) becomes greater as the particle size becomes smaller Accordingly, the expandability of the microcapsule decreases due to the smaller amount of the expanding agent. If the thickness of the shell is reduced, many small pores are generated in the shell, the volatile organic solvent cannot be retained sufficiently and deaerated on thermal expansion During suspension polymerization many polymerized fine particles not containing the expanding agent may be formed This is considered to be one reason for the reduction of the thermoexpandability.

EP-A-0 387 796 describes a process for producing an insulated electric wire comprising the step of coating around a conductor an energy radiation curable resin composition having heat expansible microspheres incorporated therein

US-A-3 615 972 describes the production of thermoplastic microspheres which encapsulate a liquid blowing agent.

US-A-4 243 754 discloses viscous, flowable, pressure-compensating fitting materials or compositions suitable for making for example, fitting pads for footwear, comprising expandible "Saran" Microspheres XD-8217 (Trade Name).

The present invention relates to a process for the production of thermoexpandable microcapsules of partiole size 1 to 10 µm, which comprises suspension-polymerizing a polymerizable monomer in the presence of a volatile organic solvent. wherein a compound having a hydrophilic group and a long hydrocarbon chain, specifically an alcohol which contains a saturated or unsaturated, and possibly branched, C₈ to C₂₂ hydrocarbon chain, are used in the polymerization system, and to thermoexpandable microcapsules obtained therefrom.

According to this process thermoexpandable microcapsules having small particle size can be prepared, which can produce microballoons at a high expansion rate.

The present invention provides thermoexpandable microcapsules which comprise a volatile organic solvent, and which have an average diameter of 1 - 10 µm, and a maximum volumetric expansion rate of 10 times or more in a polymer shell, the production thereof; thermoexpanded microcapsules (these are referred to as microballoons hereinafter), and the use thereof.

The volatile organic solvent and the polymerizable monomer used to microencapsulate the solvent are not limited, and may be selected from those which are conventionally used in this field

In the present specification the term "volatile organic solvent" means a solvent having a boiling point lower than the softening temperature of the polymer shell, but higher than the polymerization temperature of the monomer used for shell production, that is, the boiling point of the solvent is usually about -25° to 80°C, preferably -20° to 50°C.

Examples of the volatile organic solvent include a hydrocarbon of low molecular weight such as ethane, ethylene, propane, propene, butane, isobutane, butene, isobutene, pentane, isopentane neopentane, hexane or heptane; a chlorofluorocarbon such as CCl₃F, CCl₂F₂, CClF₃ or CClF₂-CClF₂; and silane compounds such as tetramethyl silane and trimethylethylsilane. The most preferred organic solvents are butene, isobutane isobutene, pentane isopentane and neopentane.

As the polymerizable monomer there are exemplified (methlacrylic acid (the term "(meth)acryl" means "methacryl and/or acryl" in this specification), itaconic acid, citraconic acid maleic acid, fumaric acid, vinylbenzoic acid; esters, amides, nitriles; vinyl aromatic compounds such as styrene methylstyrene, ethylstyrene and chlorostyrene; vinyl monomers such as vinyl chloride and vinyl acetate; vinylidene compounds such as vinylidene chloride; and dienes such as divinyl benzene, isoprene, chloroprene and butadiene

Most preferred polymerizable monomers are those which can provide a thermoplastic polymer having a high gas barrier. Examples of such monomers are (meth)acrylic acid esters thereof nitriles and vinylidene compounds

According to the present invention a compound having a hydrophilic group and a long hydrocarbon chain is used in the polymerization system when the above volatile organic solvent is microencapsulated.

As the compound having a hydrophilic group and a long hydrocarbon chain there is used an alcohol which contains a saturated or unsaturated and possibly branched, C₃ - C₂₂ hydrocarbon chain The hydrocarbon chain may have another substituent such as a halogen atom

The compound having a hydrophilic group and a long hydrocarbon chain may be used in the amount of U 1 to 10 parts by weight, more preferably 0 5 to 5 parts by weight, based on 100 pans by weight of the polymerizable monomer This compound may be used dissolved in a monomer or in a volatile organic solvent. In another embodiment this may be added into an aqueous medium independent from both Most preferably a mixture of a volatile organic soivent and a compouna having a hydrophilic group and a long hydrocarbon chain is used.

The method of microencapsuiation itself may be a conventional one except that the compound having a hydrophilic group and a long chain hydrocarbon group is used. That is, the volatile organic solvent and the polymerizable monomer are suspended in water in the presence of a polymerizing catalyst and the compound having a hydrophilic group and a long hydrocarbon chain and then the monomer is polymerized; or the polymerization is carried out by graduaily adding the monomer into the suspension of the volatile organic solvent in an aqueous medium. As another method, the polymerization may be performed by gradually adding the mixture of both into the reaction system.

The polymerization is usually carried out at 40°C to 80°C in an autoclave purged with nitrogen gas. The polymerization catalyst includes the usual peroxide catalyst, for example benzyl peroxide, tert-butyl perbenzoate, cumane hydroperoxide tert-butyl peracetate, peroxylauryl, or diisopropyl peroxydicarbonate.

In order to suspend the monomer and the volatile organic solvent, a suspending agent such as methyl cellulose, hydroxymethyl cellulose, carboxy methyl cellulose or colloidal silica, may be used.

The suspension may be propared by vigorous agitation. The agitation may be done preferably using a homogenizer at 3000 to 10000 rpm, preferably 5000 to 8000 rpm, dependent, of course, on the type of agitator, the volume of the vessel, the shape and the desired particle size of the microcapsules to be produced.

According to the present invention there are provided thermoexpandable microcapsules having a high expansion ratio, at least about 10 times or more of the initial microcapsule, more preferably about 10 to 200 times in particular about 20 to 100 times.

It is not clear why such a high expansion ratio can be obtained in the microcapsules of the present invention in spite of such a small particle size of 1 to 10 µm. The reason is considered to be that compounds having a hydrophilic group and a long chain hydrocarbon group block up fine pores in the polymer shell to prevent the volatile organic solvent from escaping through the pores: the compound acts as a plasticizer so as to make the shell homogenous and to form a thin and closed shell; or the compound acts as a dispersing agent or a compatibilizing agent for the polymer and the organic solvent so as to increase the amount of the volatile organic soivent encapsulated in the shell.

The microballoons obtained by the present invention preferably have an average particle size of about 2 to 60 µm, more preferably 5 to 50 µm, a strength (resistance to hydraulic pressure) greater than 200 kg/cm², and a real specific gravity of 0.005 to 0.15, more preferably 0.01 to 0.10.

The present invention is illustrated by following Examples. In the Examples terms "part" and "%" mean "part by weight" and "% by weight" respectively unless otherwise particularfy stated.

### COMPARATIVE EXAMPLE 1

An oil phase was prepared by mixing acrylonitrile 110 parts, vinylidene chloride 200 parts, methyl methacrylate to parts, isobutane 40 parts, and diisopropyl peroxydicarbonate 3 parts.

Separately, an aqueous phase was prepared by mixing ion exchange water 600 parts, colloidal silica dispersion (solids 30%) 130 parts, and 50% aqueous solution of a condensation product ot diethanolamine and adipic acid 3 parts, and adjusting the phase to a pH value of 3 by sulfuric acid addition. The above described oil phase and aqueous phase were mixed, and stirred by a homomixer (M-type available from Tokushu Kikakogyo K K.) at 6000 rpm for 180 seconds, and reacted in an autocalve (1.5 liter) purged with nitrogen gas under a pressure of 4 to 5 kg/cm² and at 60°C for 20 hours. Thermoexpandable microcapsules having an average diameter of 14.4 µm (HELOS & RODS: He & Ne laser diffraction particle size distribution determination device, available from Sympatec Co., was used in a wet or dry dispersion process, laser diffraction of D x 50%). volumetric expansion rate of about 70 times when heated at 130°C for 1 minute in an oven.

### EXAMPLE I

Comparative Example 1 was repeated except octanol 6 parts were added into the oil phase to give thermoexpandable microcapsules having an average particle size of 6.2 µm, and volumetric expansion rate of about 40 times when heated at 120°C for one minute in an autoclave.

### COMPARATIVE EXAMPLE 2

An oil phase containing acrylonitrile 150 parts, methyl methacrylate 150 parts, isobutane 30 parts, n-pentane 10 parts, and diisopropyl peroxydicarbonate 3 parts was prepared. Separately, ion exchange water 600 parts, colloidal silica suspension (solids 30%) 130 parts, and an aqueous solution of a condensation product of diethanolamine and adipic acid (50% solution) 3 parts were mixed, and the pH value of the mixture was adjusted to 3 by adding sulfuric acid to give an aqueous phase After the oil phase and aqueous phase were mixed, and mixture was mixed by a homomixer (M-type available from Tokushu Kikakogyo K.K.) at 6000 rpm for 180 seconds and then the resultant mixture was treated at a pressure of 4 to 5 kg/cm², and at 60°C for 20 hours in an autoclave (1.5 liter) purged with nitrogen gas to give thermoexpandable microcapsules having a volumetric expansion rate of about 20 times when heated in a 140°C oven for one minute.

### EXAMPLE 2

Comparative Example 2 was repeated except octanol 2 parts were added into the oil phase to give thermoexpandable microcapsules having an average particle size of 6.4 µm, and a volumetric expansion rate of about 13 times when heated at 130°C for one minute in an autoclave.

### COMPARATIVE EXAMPLE 3

Comparative Example 1 was repeated except the mixing was carried out at 9000 rpm for 180 seconds using a homomixer (M-type available from Tokushukikakogyo K.K.) to give thermoexpandable microcapsules having an average particle size of 9.5 µm, and a volumetric expansion rate of about 15 times when heated at 130°C for ore minute in an autoclave As is apparent from the above the volumetric expansion rate could not be reduced in spite of the higher shearing force on the dispersion, in comparision with Examples 1 and 2.

### COMPARATIVE EXAMPLE 4

Comparative Example 2 was repeated except the mixing was carried out at 9000 rpm for 190 seconds using a homomixer (M-type available from Tokushukikakogyo K.K.) to give thermoexpandable microcapsules having an average particle size of 9.0 µm, and a volumetric expansion rate of about 5 times when heated at 130°C for one minute in an autoclave. The volumetric expansion rate decreased, as in Comparative Example 3

## Claims

1. Thermoexpandable microcapsules which comprise a volatile organic solvent in a polymer shell, said microcapsules having an average diameter of 1 - 10 µm and a maximum volumetric expansion rate of 10 times or more **characterised by** said solvent containing an alcohol which contains a saturated or unsaturated and possibly brancned, C₈ - C₂₂ hydrocarbon chain.

2. Thermoexpandable microcapsules as claimed in claim 1, wherein the said compound is containing in an amount of 0.1 to 10 parts by weight based on 100 parts by weight of the polymerizable monomer forming the polymer of the shell.

3. A process for the production of thermoexpandable microcapsules of a particle size or 1 - 10 µm, which comprises suspension-polymerizing a polymerizable monomer in the presence of a volatile organic solvent, **characterised in that** the polymerization is carried out in the presence of an alcohol which contains a saturated or unsaturated and possibly branched C₈ - C₂₂ hydrocarbon chain.

4. A process as claimed in claim 3 in which the said compound is used in an amount of 0.1 to 10% by weight based on the total weight of the monomer.

5. Use of thermoexpandable microcapsules as claimed in claim 1 or claim 2 or when prepared by the process of claim 3 or c!aim 4 in the manufacture of porous insulation, light-weight, or covering, materials.

## Patentansprüche

1. Thermoexpandierbare Mikrokapseln, enthaltend ein flüchtiges organisches Lösungsmittel in einer Polymerumhüllung, wobei die Mikrokapseln einen durchschnittlichen Durchmesser von 1 bis 10 µm und eine maximale volumetrische Expansionsrate von dem 10fachen oder darüber besitzen, **dadurch gekennzeichnet, dass** das Lösungsmittel einen Alkohol enthält, der eine gesättigte oder ungesättigte und möglicherweise verzweigte C₈-C₂₂-Kohlenwasserstoffkette enthält.

2. Thermoexpandierbare Mikrokapseln nach Anspruch 1, **dadurch gekennzeichnet, dass** die Verbindung in einer Menge von 0,1 bis 10 Gew.-Teilen, bezogen auf 100 Gew.-Teile polymerisierbares Monomeres, welches das Polymere der Umhüllung bildet, vorhanden ist.

3. Verfahren zur Herstellung von thermoexpandierbaren Mikrokapseln mit einer Teilchengröße von 1 bis 10 µm, umfassend die Suspensionspolymerisation eines polymerisierbaren Monomeren in Anwesenheit eines flüchtigen organischen Lösungsmittels, **dadurch gekennzeichnet, dass** die Polymerisation in Anwesenheit eines Alkohols durchgeführt wird, der eine gesättigte oder ungesättigte und möglicherweise verzweigte C₈-C₂₂-Kohlenwasserstoffkette enthält.

4. Verfahren nach Anspruch 3, **dadurch gekennzeichnet, dass** die Verbindung in einer Menge von 0,1 bis 10 Gew.-%, bezogen auf das Gesamtgewicht des Monomeren, verwendet wird.

5. Verwendung von thermoexpandierbaren Mikrokapseln nach Anspruch 1 oder Anspruch 2 oder hergestellt nach dem verfahren von Anspruch 3 oder 4 zur Herstellung von porösen, isolierenden, leichtgewichtigen oder abdeckenden Materialien.

## Revendications

1. Microcapsules thermoexpansibles qui comprennent un solvant organique volatil dans une enveloppe de polymère, lesdites microcapsules ayant un diamètre moyen de 1-10 µm et un taux d'expansion volumétrique maximum de 10 fois ou davantage, **caractérisé par le fait que** ledit solvant contient un alcool qui contient une chaîne hydrocarbonée en C₈₋₂₂, saturée ou insaturée, et, le cas échéant, ramifiée.

2. Microcapsules thermoexpansibles selon la revendication 1, dans lesquelles ledit composé est contenu dans une quantité de 0,1 à 10 parties en poids sur la base de 100 parties en poids du monomère polymérisable formant le polymère de l'enveloppe.

3. Procédé de fabrication de microcapsules thermoexpansibles d'une dimension de particule de 1-10 µm, qui comprend la polymérisation en suspension d'un monomère polymérisable en présence d'un solvant organique volatil, **caractérisé par le fait que** la polymérisation est effectuée en présence d'un alcool qui contient une chaîne hydrocarbonée en C₈-C₂₂, saturée ou insaturée, et, le cas échéant, ramifiée.

4. Procédé selon la revendication 3, dans lequel ledit composé est utilisé dans une quantité de 0,1 à 10% en poids sur la base du poids total du monomère.

5. Utilisation de microcapsules thermoexpansibles telles que définies à la revendication 1 ou à la revendication 2 ou lorsqu'elles sont préparées par le procédé tel que défini à la revendication 3 ou à la revendication 4, dans la fabrication de matières poreuses, d'isolation, de poids léger ou de revêtement.
